# EUROPEAN PATENT APPLICATION

(11) **EP 1 381 180 A1**
(43) Date of publication of application: **14.01.2004**
(21) Application number: 03022398.6
(22) Date of filing: 26.10.1999
(51) Int. Cl.: H04L 1/00, H04B 7/005

(54) **Communication method and apparatus using a variable modulation scheme**

(30) Priority: 28.10.1998 GB 9823629
(62) Divisional of application: 99308447.4
(71) Applicant: Inmarsat Ltd., London EC1Y 1AX (GB)
(72) Inventor: Franchi, Antonio, London EC1Y 1AX (GB); Nemes, Johnny, London EC1Y 1AX (GB); Vilaca, Marcus H S, London SW15 1BD (GB); Rice, Mark, Dr., Mawsons Lake, South Australia 5095 (AU); Gray, Paul, Kingsley, Everard Park 5035 (AU); Morrison, Ian, Kingston-upon-Thames, Surrey KT2 5AA (GB)
(74) Representative: Cross, James Peter Archibald

(57) **Abstract**

In a wireless communications protocol, the rate of data transmission is varied by changing the modulation scheme. The modulation scheme may be varied according to a parameter of the data to be transmitted, such as the amount of buffered data or a requested transmission rate. Alternatively, the power level may be kept constant and the modulation scheme varied according to the gain of the receiver. The modulation scheme may be indicated by a transmitted code.

The data may be interleaved and formatted into bursts of a predetermined length selected from a set of data burst lengths. Some of the data burst lengths do not correspond to the size of one interleaver, but the data burst is divided between interleavers of different lengths.

## Description

The present invention relates to a communication method and apparatus and particularly but not exclusively to a method and apparatus for communication via satellite to mobile terminals, particularly but not exclusively to aeronautical terminals.

One example of a satellite-based service for communication to aeronautical terminals is the Inmarsat-Aero^{TM} satellite communication service, as described for example in 'Inmarsat Aeronautical Mobile Satellite System: Internetworking Issues' by J. Sengupta, IMSC '90, 'Evolution of the INMARSAT Aeronautical System: Service, System and Business Considerations' by J. Sengupta, IMSC '95, and 'Kommunikation auch hoch über den Wolken' by P. Felchlin, ComTech 11/96. The Inmarsat-Aero^{TM} service supports a packet data mode at information rates of up to 5 kbit/s.

The document EP-A-0 327 101 discloses a satellite communication system with variable coding rate, in which a transmitter increases the coding rate of transmitted data if more than a specified number of channels are requested to be transmitted. To compensate for the decrease in coding gain, the satellite retransmission power is increased.

According to one aspect of the present invention, there is provided a wireless transmitter which receives data and modulates the data for transmission according to a modulation scheme which is variable so as to vary the transmitted data rate. The modulation scheme may be varied according to the quantity of data to be transmitted, or according to the amount of data buffered for transmission, or according to the data rate required by an application generating the data to be transmitted.

Alternatively, the modulation scheme may be varied according to the gain of the receiving terminal, and the power level of transmission may be kept constant.

In one alternative, the data is transmitted continuously and the modulation scheme is continuously varied according to one or more of the above criteria. In another alternative, the data is transmitted in a burst and the same modulation scheme is used for the whole burst.

Preferably, the transmitter selects one of a plurality of modulation schemes, wherein the set of modulated symbols of one of the modulation schemes is a subset of the set of modulated symbols of another one of the modulation schemes. In one example, the schemes comprise at least two of 16QAM, QPSK and BPSK.

The data may be transmitted sequentially at different data rates in the same frequency channel, together with a code indicating the data rate used. Preferably, the data is transmitted at a constant modulation symbol rate, the data rate being determined by selection of different modulation schemes. Preferably, the code is a sequence of modulated symbols which precedes the data transmitted at the indicated rate, to assist with acquisition and demodulation of the transmitted symbols.

According to another aspect of the present invention, there is provided a method of transmitting over a wireless link a data burst of a predetermined length selected from one of a set of data burst lengths, comprising interleaving the data of the data burst prior to transmission by means of one or more interleavers, wherein the size of the one or more interleavers is selected from a set of interleaver sizes fewer in members than the set of data burst lengths, such that each of the data burst lengths not corresponding to one of the interleaver sizes is interleaved using two or more of the interleaver sizes.

According to another aspect of the present invention, there is provided a signal format for a radio frequency packet data transmission via satellite in which parameters of the format are selected so as to give a high data rate with a low bit error rate in an aeronautical fading environment.

Embodiments of the present invention may include apparatus for carrying out a method in accordance with the present invention, and/or software designed for carrying out a method in accordance with the present invention when loaded and executed on suitable communications equipment.

Specific embodiments of the present invention will now be described with reference to the accompanying drawings, in which:
Figure 1 is a diagram showing the main elements of a satellite communication system;
Figure 2a is a diagram of the functional sections of a transmitter in the system of Figure 1;
Figure 2b is a diagram of the relevant functional sections of a receiver in the system of Figure 1;
Figure 3 is a diagram of an encoder for use in the transmitter of Figure 2a;
Figure 4 is a diagram of the 16QAM constellation used for modulation in the transmitter of Figure 2a;
Figure 5 is a diagram of the channels used in the system of Figure 1;
Figure 6 is a diagram of the packet structure of the R channel of Figure 5;

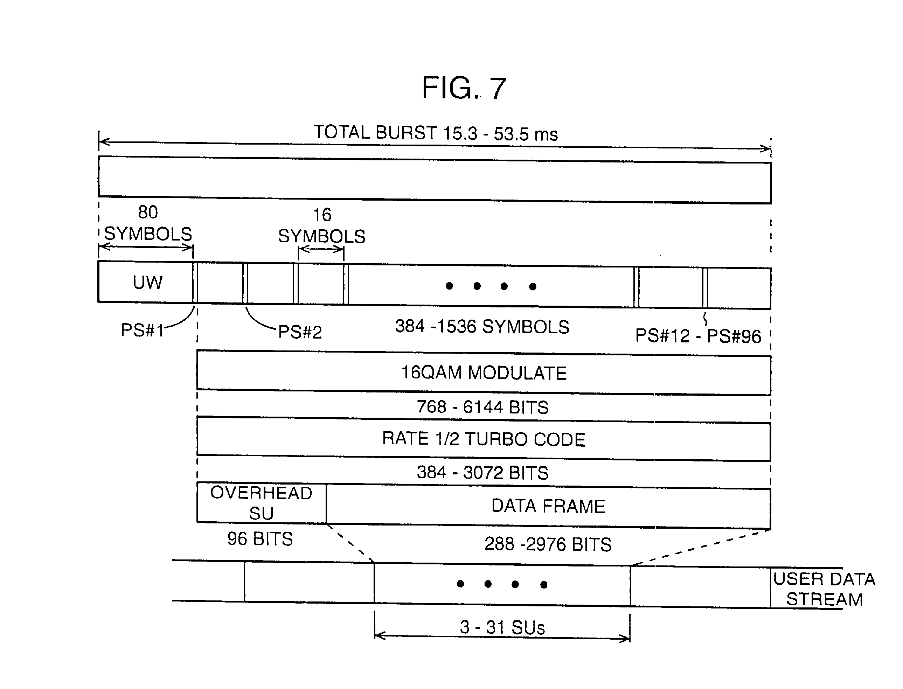

Figure 7 is a diagram of the packet structure for the T channel of Figure 5 at a data rate of 64 kbit/s;
Figure 8 is a diagram of the packet structure for the T channel at a data rate of 32 kbit/s;
Figure 9 shows the different interleaver sizes used for different data burst lengths in the T channel; and
Figures 10 to 12 are diagrams of the channel formats for the P channel at data rates of 16, 32 and 64 kbit/s respectively.

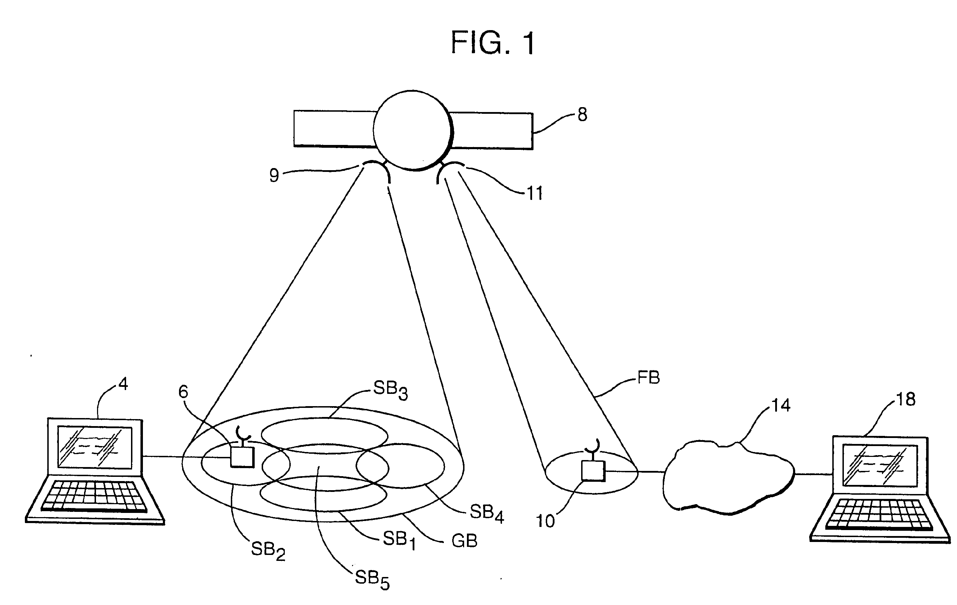

As shown in Figure 1, mobile terminal equipment 4 is connected to an aeronautical earth station (AES) 6, both of which are installed in an aircraft. The mobile terminal equipment 4 sends digital data to the AES 6 for RF modulation and transmission to a satellite 8, and the AES 6 receives and demodulates digital data from the satellite 8, the demodulated data then being sent to the mobile terminal equipment 4.

The satellite 8 carries a multibeam antenna 9 which generates a plurality of spot beams SB₁ to SB₅ for transmission and reception of signals over a user link, together with a global beam GB which encompasses the coverage areas of all the spot beams SB. The satellite 8 also carries a feeder link antenna 11 which generates a feeder link beam FB directed towards a Ground Earth Station (GES) 10, for transmission and reception of signals over a feeder link.

The satellite 8 carries transponders which receive modulated signals in each of the spot beams SB and the global beam GB, convert them to an intermediate frequency, amplify them and retransmit them at a different frequency from the received frequency in the feeder link beam FB. Likewise, signals transmitted by the GES 10 in the feeder link beam FB are retransmitted at a different frequency in one of the spot beams SB or the global beam GB. The satellite 8 thereby links the AES 6 to the GES 10, so that signals transmitted by the AES 6 are received by the GES 10 and *vice versa,* via the satellite 8.

During call set-up, signals are transmitted and received by the AES 6 in the global beam GB, and channels are assigned in one of the spot beams SB in which the AES 6 is located. Transmission and reception of user data then takes place in the spot beam channels. Examples of such arrangements are the spot beam and global beam channels of the Inmarsat-3™ satellites, as described for example in the article 'Launch of a New Generation' by J R Asker, TRANSAT, Issue 36, January 1996, pages 15 to 18, published by Inmarsat, the contents of which are included herein by reference.

The GES 10 is connected through a public data network (PDN) 14, such as an ISDN, to fixed terminal equipment 18, which is compatible with the mobile terminal equipment 4, together with a suitable interface to the network 14, such as an ISDN terminal adapter.

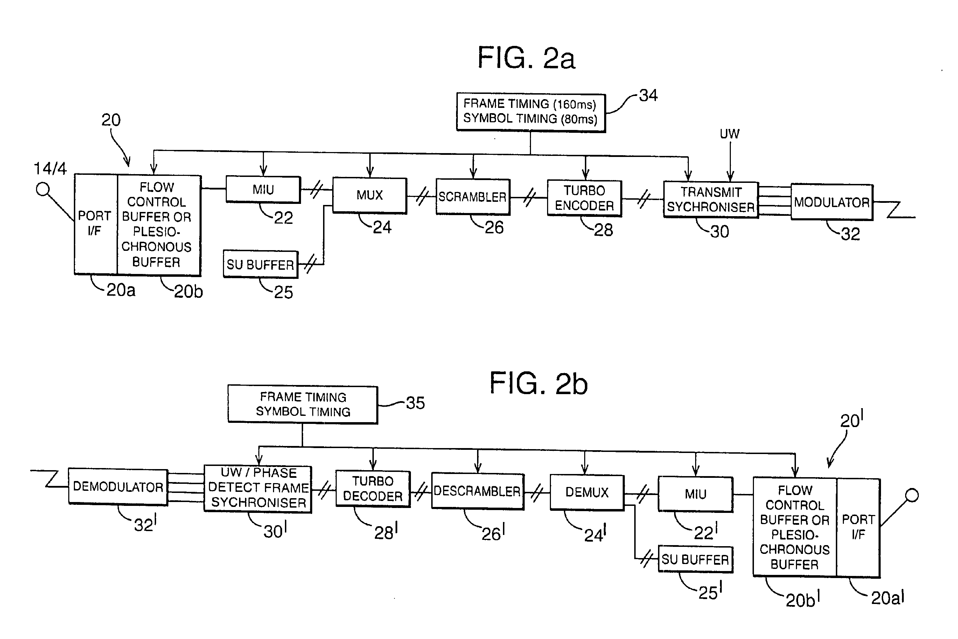

Figure 2a shows the relevant functional sections of a transmitter section of the AES 6 and the GES 10. The functions of the AES 6 and the GES 10 are distinct in other respects, but for convenience the same diagram and reference numerals are used for the relevant sections of each. Parallel data connections are shown by double diagonal lines.

An interface portion 20 comprises a port interface 20a for connection to the network 14 or to the mobile terminal equipment 4. The port interface 20a comprises a physical connector appropriate to the connection, such as an RS-232C connector for digital connection. The interface portion 20 also includes a buffer 20b to permit flow control and/or plesiochronous buffering. Data is output from the interface portion 20 to a modem interface unit (MIU) 22 which implements communications protocols compatible with those of the mobile terminal equipment 4 and the fixed terminal equipment 18. For example, the MIU 22 may translate ISDN signalling messages to satellite signalling messages.

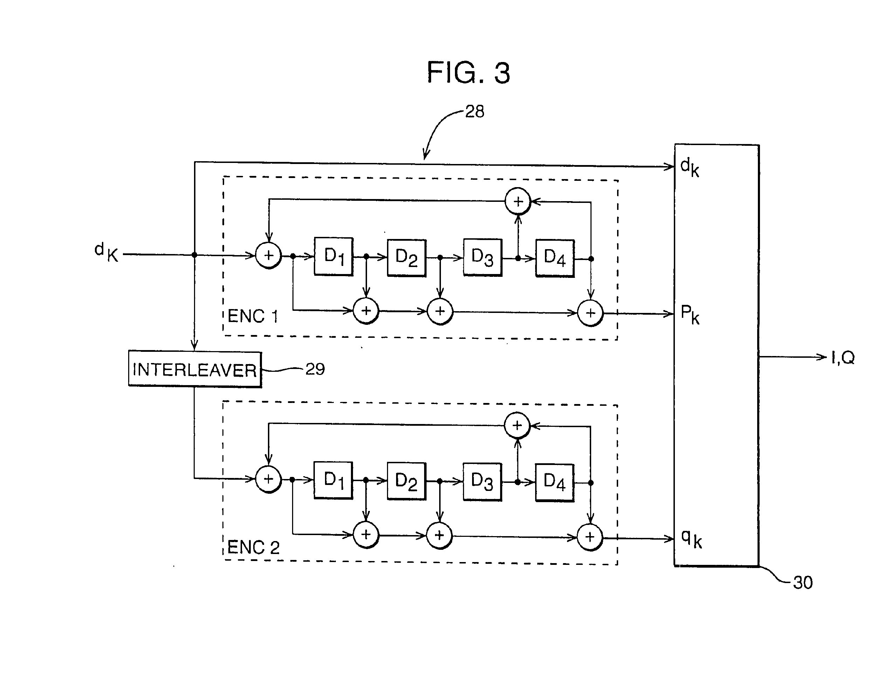

Data is output from the MIU 22 to a multiplexer 24 where the data is multiplexed with signalling information input from a signalling unit buffer 25. The output of the multiplexer 24 is scrambled by a scrambler 26 using a scrambling vector determined during call set-up and encoded by an encoder 28. The encoder 28 implements a parallel concatenated convolutional code known as a 'Turbo' code, which provides a type of forward error correction particularly well suited to digital radio frequency transmission. The encoder is shown in more detail in Figure 3. The data and parity bits output by the encoder 28 are buffered by a transmit synchroniser 30 and output as sets of one or more bits to a modulator 32, which modulates each set of bits as one symbol. The transmit synchroniser 30 also receives data sets which are modulated as a unique word (UW). The modulated signal is amplified by a high power amplifier (HPA) and transmitted by an antenna to the satellite 8. The timing of the transmitter is controlled by a clock 34, which provides frame and symbol timing signals to the portions of the transmitter.

Figure 2b shows the relevant functional sections of a receiver section of the AES 6 and the GES 10. The functions of the AES 6 and the GES 10 are distinct in other respects, but for convenience the same diagram and reference numerals are used for the relevant sections of each. The functions of the receiver portion are the inverse of corresponding functions of the transmitter portion shown in Figure 2a and the same reference numerals are therefore used, with a dash to denote the inverse, in Figure 2b.

Symbols received from the satellite 8 via an antenna are amplified by a low-noise amplifier (LNA), demodulated by a demodulator 32' and output as sets of one or more bits to a phase/unique word detector 30' which acquires the phase and frame timing of the received signal, as well as detecting the unique word. The received data is decoded by a decoder 28', which decodes the turbo encoded data using a MAP (maximum a priori) or SOVA (soft output Viterbi algorithm) decoder. The decoded data is descrambled by a descrambler 26', using the inverse of a scrambling vector used by the scrambler 26. The descrambled data is demultiplexed by a demultiplexer 24' which demultiplexes user data from signalling information, the latter being stored in a signalling unit buffer 25'. The data is sent through a modem interface unit (MIU) 22' to an interface portion 20' for connection to the network 14 or mobile terminal equipment 4. The interface portion 20' comprises a port interface 20a' and a buffer 20b'. A clock 35 provides frame and symbol synchronisation signals to the different parts of the receiver.

An example of a Turbo encoder suitable for use in the encoder 28 is shown in Figure 3. Data bits dₖ are input to a first encoder ENC1, and to an interleaver 29, the output of which is connected to a second encoder ENC2. Each encoder ENC1 and ENC2 is a recursive convolutional coder comprising four intermediate binary stores D1 to D4, and binary adders or exclusive-OR gates. With each cycle, the contents of each of the binary stores D1 to D3 is shifted to binary stores D2 to D4 respectively, while the new contents of D1 are derived from the previous contents of D2 to D4. The output pₖ from the first encoder and the output qₖ from the second encoder are derived from the contents of the binary stores D1, D2 and D4 and from the input to the binary store D1.

The data bits dₖ, the non-interleaved parity bits pₖ and the interleaved parity bits qₖ are output to the transmit synchroniser 30 from which sets of bits are output in a format dependent on the number of bits per modulated symbol. The transmit synchroniser 30 discards some of the input bits according to a predetermined puncturing format to give the required coding rate. With 16QAM, the transmit synchroniser 30 outputs sets of four bits (I1, I0, Q1, Q0) which are derived from the input bits as follows:
(d¹, q¹, d², p²) → (I1, I0, Q1, Q0)
where the superscripts distinguish data and parity bits input during a first and second cycle.

Each set of bits is modulated as one symbol by the modulator 32. With 16QAM, the bits I1, I0 modulate the I (amplitude) component and the bits Q1, Q0 modulate the Q (phase) component.

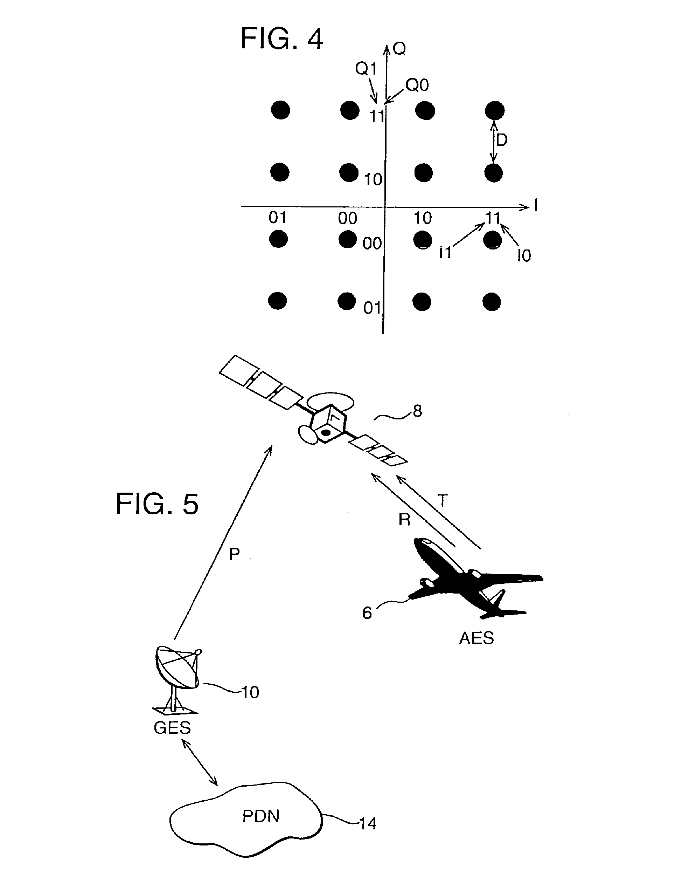

The 16QAM constellation scheme, as shown in Figure 4, is square, although alternatively a circular 16QAM constellation may be used. The constellation mapping is summarised in Table 1 below, where D is the minimum distance between points.

**Table 1**

| **I1** | **I0** | **Q1** | **Q0** | **I** | **Q** |
|---|---|---|---|---|---|
| 0 | 1 | 0 | 1 | -3D/2 | -3D/2 |
| 0 | 1 | 0 | 0 | -3D/2 | -D/2 |
| 0 | 1 | 1 | 0 | -3D/2 | D/2 |
| 0 | 1 | 1 | 1 | -3D/2 | 3D/2 |
| 0 | 0 | 0 | 1 | -D/2 | -3D/2 |
| 0 | 0 | 0 | 0 | -D/2 | -D/2 |
| 0 | 0 | 1 | 0 | -D/2 | D/2 |
| 0 | 0 | 1 | 1 | -D/2 | 3D/2 |
| 1 | 0 | 0 | 1 | D/2 | -3D/2 |
| 1 | 0 | 0 | 0 | D/2 | -D/2 |
| 1 | 0 | 1 | 0 | D/2 | D/2 |
| 1 | 0 | 1 | 1 | D/2 | 3D/2 |
| 1 | 1 | 0 | 1 | 3D/2 | -3D/2 |
| 1 | 1 | 0 | 0 | 3D/2 | -D/2 |
| 1 | 1 | 1 | 0 | 3D/2 | D/2 |
| 1 | 1 | 1 | 1 | 3D/2 | 3D/2 |

To give lower channel information rates, BPSK and QPSK modulation are used, with the same symbol rate and turbo coding rate as 16QAM and using only a subset of the 16QAM constellation. With QPSK modulation, only the four outermost constellation points are used. The transmit synchroniser 30 outputs sets of two bits (I1,Q1) which are derived from the input bits as follows:
(d¹,q¹,d²,p²)→(I1¹,Q1¹,I1²,Q1²) where the superscripts distinguish bits input and output during first and second cycles. In other words, the I1 bit always carries the data bit d, while the Q1 bit alternates between the q parity bit for one cycle and the p parity bit for the next cycle. The constellation mapping is summarised in Table 2 below:

**Table 2**

| **I1** | **Q1** | **I** | **Q** |
|---|---|---|---|
| 1 | 1 | 3D/2 | 3D/2 |
| 0 | 1 | -3D/2 | 3D/2 |
| 0 | 0 | -3D/2 | -3D/2 |
| 1 | 0 | 3D/2 | -3D/2 |

With BPSK, only two of the 16QAM constellation points are used with maximum separation. The transmit synchroniser 30 outputs only one bit I1Q1 per output cycle, derived from the input bits as follows:
(d¹, q¹, d², p²) → (I1Q1¹, I1Q1², I1Q1³, I1Q1⁴)
where the superscripts indicate input and output cycles respectively. The constellation mapping is summarised in Table 3 below:

**Table 3**

| **I1, Q1** | **I** | **Q** |
|---|---|---|
| 1 | 3D/2 | 3D/2 |
| 0 | -3D/2 | -3D/2 |

BPSK is always used for transmission of unique words, so that these can be easily acquired by the receiver.

Since the QPSK and BPSK are subsets of 16QAM, a single 16QAM demodulator 32' may used for 16QAM, QPSK and BPSK demodulation.

Figure 5 shows channels used in a packet mode data service for communication between the fixed terminal equipment 18 and the AES 6. The fixed terminal equipment 18 is connected through the PDN 14 to the GES 10. In the forward direction (GES 10 to AES 6), a packet mode channel P carries system signalling, control and user data in a time division multiplex (TDM) format. In the return direction (AES 6 to GES 10), a random access channel R carries signalling data and short bursts of user data in a slotted aloha format, and a time division multiple access (TDMA) channel T carries user messages in reserved TDMA slots.

### R-Channel

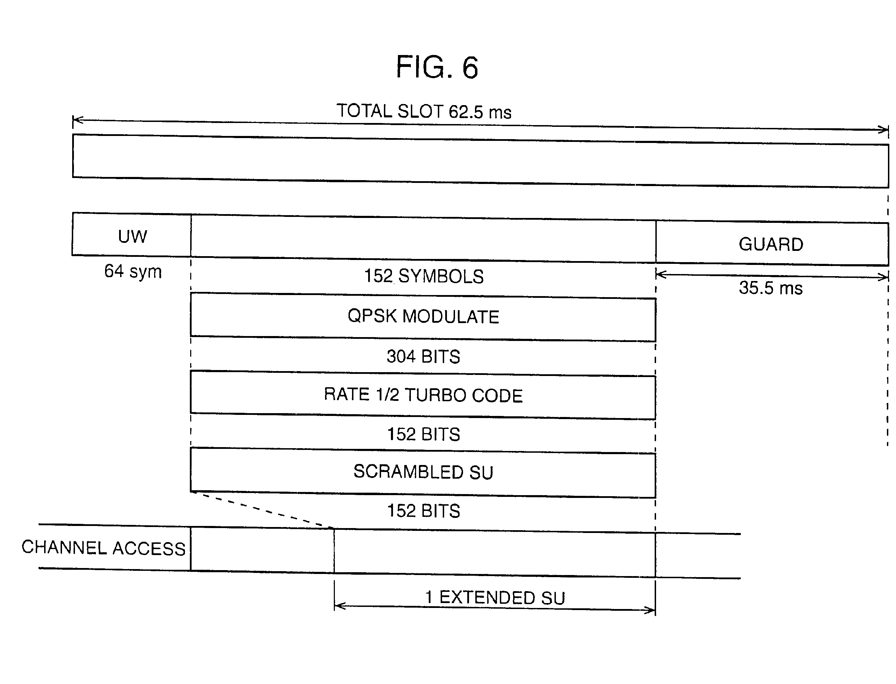

The R channel is a slotted-aloha random access channel which conveys short blocks of 152 information bits, with a packet structure shown in Figure 6 and parameters summarized below in Table 4:

**Table 4**

| | |
|---|---|
| **Data Rate** | 8 kbit/s |
| **Coding/Modulation** | Rate 1/2 turbo coded QPSK |
| **Symbol Rate** | 8 ksym/s |
| **Data Frame Length** | 1 extended SU (152 Bits) |
| **Overhead** | 0 bits |
| **Interleaver size** | 152 bits |
| **Unique Word (UW) length** | 64 Symbols |
| **Burst length** | 216 Symbols |
| **Slot Length** | 62.5 ms |
| **Guard time** | 35.5 ms |

In the R channel a unique word (UW) is transmitted with every packet to help maintain synchronisation. In one example, the value of the UW is Hex 10A6A9C6BA0CFC91; each bit corresponds to one BPSK symbol.

### T Channel

The T channel is a TDMA channel with variable packet lengths. The symbol rate is constant, but different modulation schemes are used for different data rates: 16QAM for 64 kbit/s and QPSK for 32 kbit/s. These coding and modulation schemes were chosen so as to allow the data rate to be transmitted within an allocation of 40 kHz bandwidth per channel, with better power efficiency for the 32 kbit/s data rate.

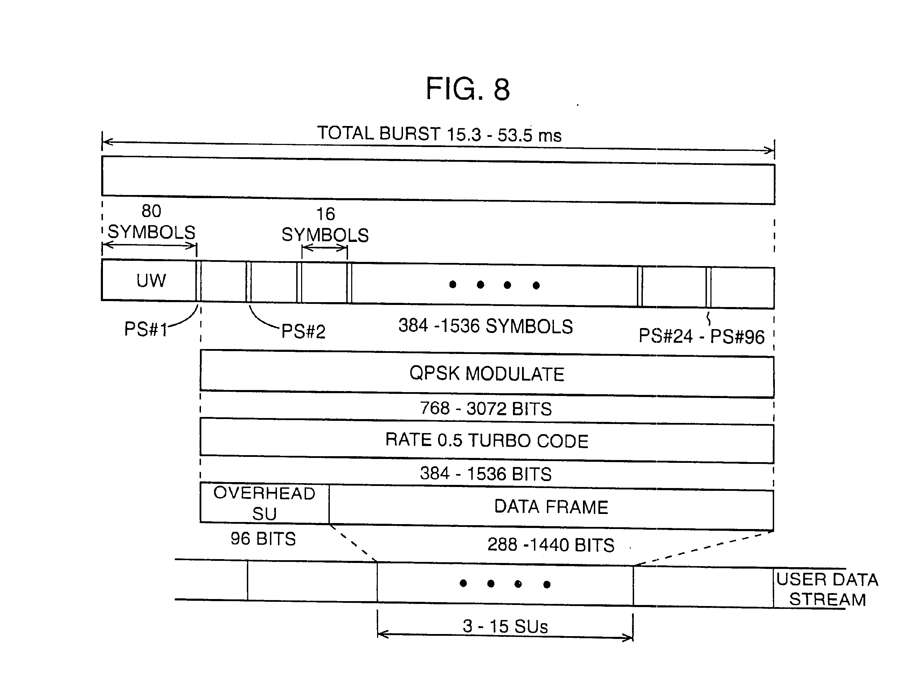

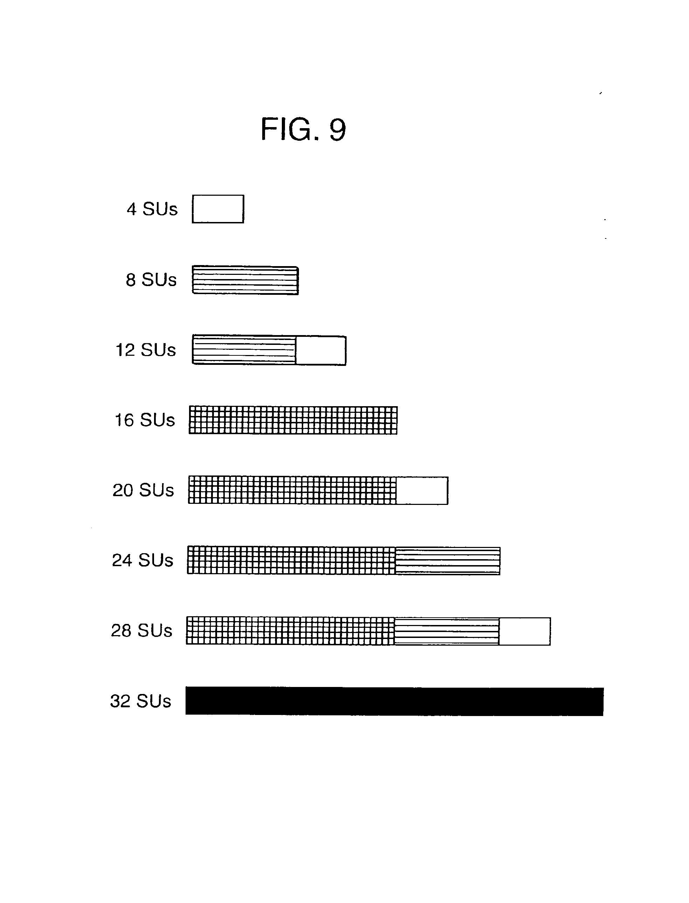

The packet structure for 64 kbit/s is shown in Figure 8, the packet structure for 32 kbit/s is shown in Figure 9 and the channel parameters are summarised below in Table 5:

**Table 5**

| **Data Rate** | **32 kbit/s** | **64 kbit/s** |
|---|---|---|
| Coding/Modulation | Rate ½ turbo coded QPSK | Rate ½ turbo coded 16QAM |
| Symbol Rate | 33.6 ksym/s | 33.6 ksym/s |
| Data Frame Length | 3, 7, 11 or 15 SU | 3,7,11,15,19, 23, 27 or 31 SU |
| Overhead | 1 SU (96 bits) | 1 SU (96 bits) |
| Unique Word Length | 80 Symbols | 80 Symbols |
| Interleaver Size | 384, 768, 1536 | 384, 768, 1536, 3072 |
| Pilot Symbol (PS) Insertion Rate | 1 in 16 | 1 in 16 |

The total number of signalling units (SU's), including the one overhead SU, is therefore 4n where n is an integer from 1 to 4 for 32 kbit/s and 1 to 8 for 64 kbit/s. In order to optimize the coding gain, a different size of interleaver 29 is required for each burst length. In order to restrict the different number of interleaver sizes required, the burst length is restricted to a multiple of four SU's. If there is insufficient data to fill a multiple of four SU's, the spare capacity of the burst is padded with null data.

In order to reduce the required number of different interleavers 29, only four different interleavers 29 are provided, corresponding in size to 4, 8, 16 and 32 SU's. For burst lengths between these values, the SU's for transmission are separated into blocks of 4, 8 or 16 SU's, as shown in Figure 9, and Turbo-coded and transmitted in those separate blocks. The choice of four different interleaver sizes provides a good compromise between improvement in coding gain and power wasted in transmitting null padding data.

In order to reserve slots in the T channel, the AES 6 sends a request to the GES 10 in the R channel indicating the burst length required. The GES 10 indicates in the P channel which slots are reserved for the AES 6. The AES 6 then transmits the message in the allocated slots of the T channel. The AES 6 selects whether to transmit at 32 kbit/s or 64 kbit/s in the allocated slots and indicates which data rate will be used by selecting one of two different unique words for transmission at the beginning of the burst. Thus, the T channel may contain transmissions at 32 kbit/s and 64 kbit/s in different slots.

The AES 6 selects whether to use 32 or 64 kbit/s according to the total quantity of information to be sent in the burst and the power level which can be used while satisfying the link budget between the AES 6 and the satellite 8. The link budget is calculated so as to give a bit error rate of 1 in 10⁶. For example, if the AES 6 has only a low transmit power level, only 32 kbit/s transmission can be used.

### P Channel

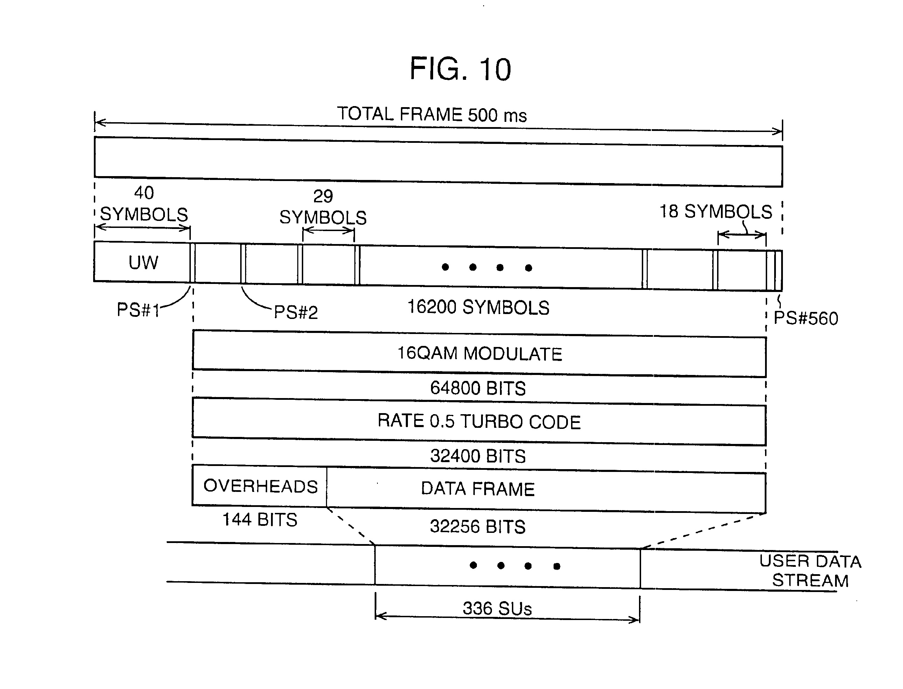

The P-channel supports data rates of 16, 32 and 64 kbit/s. A unique word of either 40 or 80 symbols may be used, with the number of overhead bits being reduced for the 80 symbol alternative. The channel formats for these rates, for a UW length of 40 symbols, are shown respectively in Figures 10, 11 and 12 and the channel parameters are summarised below in Table 6:

**Table 6**

| | | | |
|---|---|---|---|
| Nominal Information Rate (kbit/s) | 64 | 32 | 16 |
| No. of Information SUs / frame | 336 | 168 | 84 |
| No. overhead bits / frame | 144 or 64 | 72 or 32 | 36 or 16 |
| Total bits/frame | 32400 | 16200 | 8100 |
| Interleaver Size | 16200 | 8100 | 4050 |
| Turbo Code Rate | ½ | ½ | ½ |
| Modulation Type | 16QAM | QPSK | BPSK |
| No. coded symbols/frame | 16200 | 16200 | 16200 |
| PS insertion rate | 1 every 29 | 1 every 29 | 1 every 29 |
| PS symbols/frame | 560 | 560 | 560 |
| UW length | 40 or 80 | 40 or 80 | 40 or 80 |
| Total symbols/frame | 16800 | 16800 | 16800 |
| Modulation Symbol Rate (ksym/s) | 33.6 | 33.6 | 33.6 |

The GES 10 determines the data rate of the P channel for each frame according to the quantity of data received from the network 14 and stored in the buffer 20b, so as to use the lowest data rate necessary to prevent the buffer 20b from filling. The UW indicates the data rate selected, so that the AES 6 can select the appropriate demodulation and decoding scheme for the frame before the data symbols are received.

The GES 10 controls the power level at which it transmits the P channel according to the data rate selected, for example by controlling the gain of a pre-amplifier which provides the P channel input to the HPA. For example, a switch from 16QAM to QPSK and QPSK to BPSK may be accompanied by a reduction in transmit power of 5 and 3 dB respectively. Likewise, an increase in data rate by change in data rate is accompanied by a corresponding increase in transmit power. To avoid disturbance to the system, the change in power level may be effected in 1 dB steps.

The P channel is broadcast continuously by the GES 10 to assist acquisition by the AES 6. The transmission power level of the P channel is reduced as the data rate of the P channel is reduced, to minimize the power consumption of the satellite while maintaining the link budget of the P channel so as to achieve a bit error rate of 1 in 10⁶.

In a variant of the above embodiment, in addition to the aeronautical earth stations (AES) 6, terrestrial mobile earth stations (MES) may be used with air interface protocols which differ only as described below. In this variant, the AES's 6 have low-gain antennas with a gain of 12 dB, while the MES's have high-gain antennas with a gain of 17 dB. In this variant, the power level of the P channel is kept constant and a different modulation scheme is used dependent on whether the terminal receiving the current frame has a low-gain or high-gain antenna.

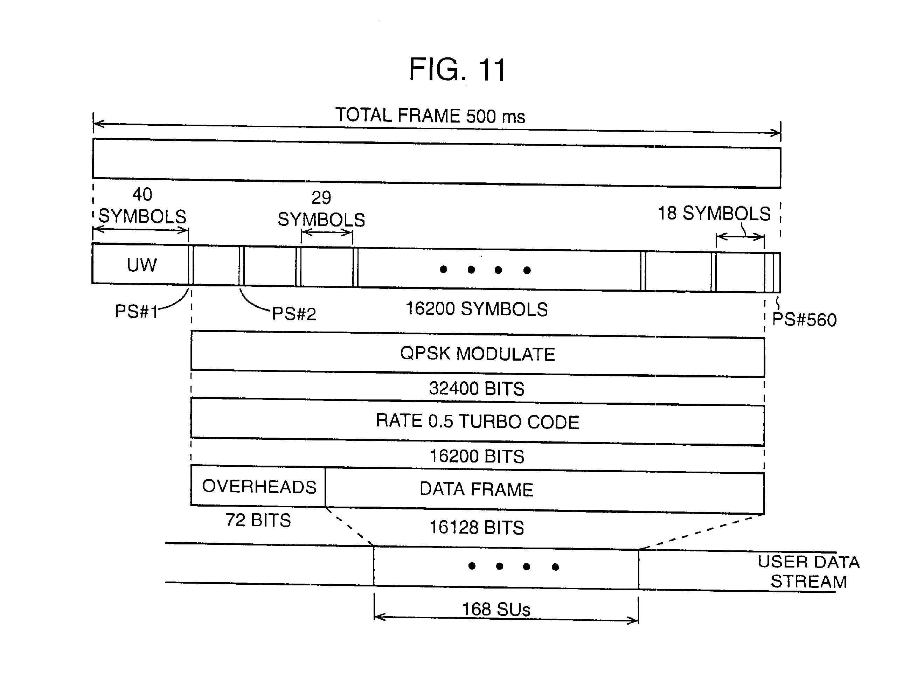

The GES 10 identifies the antenna gain type of the terminal to which each frame of the P channel is to be transmitted. This information may be indicated by the terminal when requesting access to the system, for example by sending a log-on request in the R channel, and stored by the GES 10 while that terminal is logged on. The GES 10 then selects a modulation scheme for that frame according to the receiving terminal antenna type. For example, 16 QAM, as shown in Figure 10, is used for transmission to high-gain antenna terminals, while QPSK, as shown in Figure 11, is used for transmission to low-gain antenna terminals. The difference in C/No required for reception of 16QAM and QPSK at equal power levels is at least 5 dB, thus compensating for the difference in antenna gains.

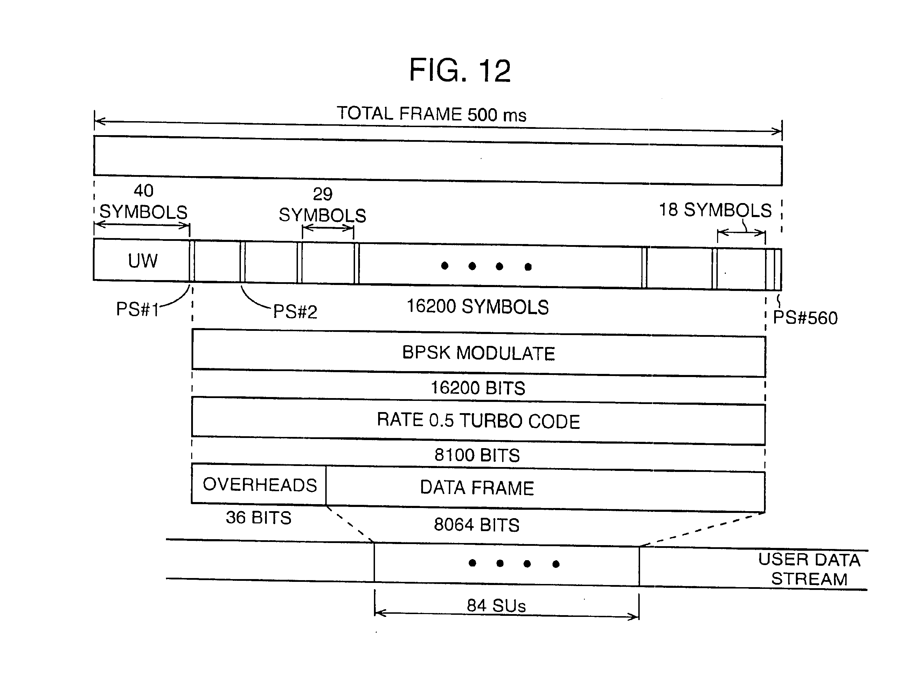

The GES 10 may also recognise terminals having very low-gain antenna types, and select a BPSK modulation scheme as shown in Figure 12 for transmission to those types of terminal in the P channel.

Although the above embodiments have been described with reference to an aeronautical satellite communications system, aspects of the present invention are also applicable to satellite communications to other types of mobile or fixed terminals, and to wireless terrestrial communications.

The above embodiments have been described in terms of discrete functional blocks, but it will be understood by the skilled person that these do not necessarily correspond to discrete hardware or software objects. As is common in the art, some or all of the baseband processing, including channel selection after down-conversion, may be performed by a suitably programmed digital signal processor (DSP).

## Claims

1. A method of transmitting data over a wireless link, comprising:
modulating the data according to a variable modulation scheme and transmitting the modulated data over the wireless link; wherein the rate of data transmission over the wireless link varies according to the modulation scheme, the modulated data is transmitted together with a code indicating the data rate used for transmission, and the modulation scheme is varied according to a parameter of the data to be transmitted.

2. A method as claimed in claim 1, wherein the parameter comprises the quantity of said data stored in a buffer prior to transmission.

3. A method as claimed in claim 1, wherein the parameter comprises a requested data rate for the transmission.

4. A method of transmitting data over a wireless link, comprising:
modulating the data according to a variable modulation scheme and transmitting the modulated data over the wireless link; wherein the rate of data transmission over the wireless link varies according to the modulation scheme and the modulation scheme is varied according to variations in gain of different wireless receiving terminals to which the data is transmitted.

5. A method as claimed in claim 4, wherein the modulated data is transmitted together with a code indicating the data rate used for transmission.

6. A method as claimed in claim 4 or claim 5, wherein the power level of the transmission is constant as the modulation scheme varies.

7. A method as claimed in any preceding claim, wherein the data is transmitted continuously and the modulation scheme is continuously varied.

8. A method as claimed in any one of claims 1 to 3, wherein the data is transmitted as a burst and the modulation scheme is selected prior to transmission according to the parameter.

9. A method as claimed in claim 8, wherein a code indicative of the selected data rate is transmitted prior to the burst.

10. A method as claimed in claim 8 or claim 9, wherein the data bursts are of variable length.

11. A method as claimed in any one of claims 1 to 3 and 8 to 10, wherein the power level of the transmission is varied according to the selected modulation scheme such that a higher data rate is transmitted at a higher power level.

12. A method as claimed in any preceding claim, wherein the variable modulation scheme comprises a plurality of different modulation schemes, wherein the set of modulated symbols of one of the modulation schemes is a subset of the set of modulated symbols of another one of said modulation schemes.

13. A method as claimed in claim 12, wherein the schemes comprise at least two of 16QAM, QPSK and BPSK.

14. A method as claimed in any preceding claim, wherein the data is modulated and transmitted at a constant modulation symbol rate and the modulation scheme of the data is varied so as to determine the data rate.

15. A method as claimed in any preceding claim, wherein the code comprises a sequence of modulation symbols which precedes the data at the indicated data rate.

16. A method of transmitting a data burst over a wireless link, comprising:
receiving a data block;
selecting from a predetermined set of burst lengths the smallest burst length sufficient to transmit the data block;
selecting from a predetermined set of interleaver sizes one or more interleaver sizes collectively having a capacity corresponding to the selected burst length, wherein the number of interleaver sizes is smaller than the number of burst lengths;
interleaving the data block using the selected one or more interleaver sizes; and
transmitting the interleaved data block as a burst having the selected burst length.

17. A method as claimed in claim 16, wherein if the selected burst length does not correspond to one of the interleaver sizes, a plurality of interleaver sizes are selected, the sum of which corresponds to the burst length, the data block is divided into sub-blocks corresponding respectively to the selected interleaver sizes and the sub-blocks are interleaved using the respective selected interleaver sizes.

18. A method as claimed in claim 16 or claim 17, wherein the difference between the selected burst length and the data block size is made up of padding bits.

19. A method as claimed in any one of claims 16 to 18, wherein the set of interleaver sizes comprises a smallest interleaver size and multiples of the smallest interleaver size by sequential powers of the number 2.

20. A method as claimed in any preceding claim, wherein the wireless link comprises a satellite communications link.

21. Apparatus arranged to perform a method as claimed in any preceding claim.

22. A wireless communication signal generated by a method as claimed in any one of claims 1 to 19.

23. A computer program arranged to perform a method as claimed in any one of claims 1 to 19 when executed on a processor connected to a suitable transmitter.
